# EUROPÄISCHE PATENTSCHRIFT

(11) **EP 2 524 787 B1**
(45) Veröffentlichungstag und Bekanntmachung des Hinweises auf die Patenterteilung: **13.05.2015**
(21) Anmeldenummer: 12158987.3
(22) Anmeldetag: 12.03.2012
(51) Int. Cl.: B29C 33/10, B29D 30/06

(54) **Vulkanisierform für Fahrzeugreifen mit Entlüftungsmittel**
Vulcanising mould for vehicle tyres with venting means
Forme vulcanisée pour pneus de véhicules avec de moyens de ventilation

(30) Priorität: 17.05.2011 DE 102011050409
(43) Veröffentlichungstag der Anmeldung: 21.11.2012
(73) Patentinhaber: Continental Reifen Deutschland GmbH, 30165 Hannover (DE)
(72) Erfinder: Kendziorra, Norbert, 30827 Garbsen (DE)
(74) Vertreter: Finger, Karsten

(56) Entgegenhaltungen:
- EP-A1- 2 199 048
- WO-A1-2007/139523
- WO-A2-2007/100308
- JP-A- 53 056 274
- JP-A- 2006 159 597
- JP-U- 60 105 120
- KR-A- 20070 097 474

## Beschreibung

Die Erfindung betrifft eine Vulkanisierform für Fahrzeugreifen, welche aus Formsegmenten mit innenseitigen Formflächen besteht, wobei die Formsegmente Entlüftungsmittel mit zylindrischen Entlüftungskanälen aufweisen, welche mit der Atmosphäre in Verbindung stehen und durch welche Luft aus dem Formenhohlraum der Vulkanisierform durch das Formsegment hindurch nach außen ausleitbar ist, wobei ein tellerförmiges Ventil oberhalb des radial inneren, in den Formenhohlraum mündenden Endes des Entlüftungskanals angeordnet ist, wobei das Venti einen größeren Durchmesser als das radial innere Ende des Entlüftungskanals aufweist und wobei das Ventil über die Formfläche hinaus in den Formenhohlraum hineinragt.

Es ist bekannt, Entlüftungsmittel in Vulkanisierformen vorzusehen, um die beim Heizpressvorgang des Reifenrohlings zwischen dem Reifenrohling und den Formflächen verbleibende Luft während des Pressvorganges des Reifenrohlings an die Formflächen aus dem Formenhohlraum abführen zu können. Es sollen unerwünschte Fehlstellen in Form von Unebenheiten an der Oberfläche des Reifens vermieden werden. Während des Heizpressvorganges bekommt der Reifenrohling seine endgültige Kontur und wird durch Kautschukvernetzungsreaktionen in seinen gummielastischen Zustand überfährt.

Ein Ventil dient dazu, den Ein- oder Auslass von Gasen oder Flüssigkeiten zu kontrollieren oder die Fließrichtung zu steuern und zu regeln.

Es ist bekannt, dass beim Ausvulkanisieren des Fahrzeugluftreifens Kautschukmaterial in als Entlüftungsmittel dienende zylindrische Entlüftungskanäle gepresst bzw. gesogen werden kann. Die dadurch entstehenden unerwünschte Austriebe bleiben auf dem fertigen Fahrzeugluftreifen erhalten und müssen vor dessen Verwendung mit eigens dafür vorgesehenen Maschinen entfernt werden. Dieses sogenannte "Trimmen" führt zu einer Verlängerung und Verteuerung des Herstellungsprozesses des Fahrzeugluftreifens.

Es ist ebenfalls bekannt, in der Formfläche der Vulkanisierform mündende Entlüftungskanäle durch gebohrte Ausnehmungen zu bilden, in welche verschließbare Entlüftungsventile eingesetzt sind. Als verschließbare Entlüftungsventile finden beispielsweise sogenannte "Eurovents", wie in der DE 195 43 276 Aloffenbart, oder Ventile wie in der JP 53 056274 A bzw. wie in der JP 60 105120 U, Verwendung. Ein Eurovent weist in einer bestimmten Ausführungsform eine aus Metall gefertigte Hülse auf, in welcher zur Abdichtung des Formenhohlraums ein entgegen der Kraft einer Feder verschließbarer Ventilteller an einem Schaft angeordnet ist, welcher das Hülsenende in der Ebene der Formfläche verschließt. Dieses Ventil vermeidet die Austriebe, da der Ventilteller das Entlüftungsmittel mit der Formfläche fluchtend verschließt und kein Kautschukmaterial in den Entlüftungskanal eindringen kann. Nachteilig ist jedoch, dass das Eurovent verschmutzungsanfällig ist, weil beispielsweise unter den Tellerrand gelangendes Kautschukmaterial das Ventil verschmutzt, verklebt und unbrauchbar macht. Dieser nachteilige Effekt wird durch moderne Kautschukmischungen, die alternative Weichmacher enthalten, noch verstärkt.

Da zur Gewährung einer ausreichenden Entlüftung einer Vulkanisierform, insbesondere auch in Nischen des Reifenprofils, eine Vielzahl solcher Entlüftungskanäle, üblicherweise 500 bis 6000, pro Vulkanisierform vorgesehen werden müssen, führt die Reinigung bzw. der Austausch der verschmutzten Ventile zu einem erheblichen Kosten- und Zeitaufwand.

Es ist die Aufgabe der vorliegenden Erfindung, eine Vulkanisierform für Fahrzeugreifen mit Entlüftungsmitteln bereitzustellen, die weniger verschmutzungsanfällig ist und mit denen der Fahrzeugreifen mit nur geringem Gummiaustrieb vulkanisierbar ist. Zudem soll der mit dieser Vulkanisierform vulkanisierte Fahrzeugreifen nicht auf seinen Austrieben stehen.

Diese Aufgabe wird gelöst, indem das Ventil mit einem verbleibenden Ringspalt in Bezug auf das radial innere Ende des Entlüftungskanals angeordnet ist, so dass das Entlüftungsmittel nie gasdicht schließt.

Durch ein derartiges Entlüftungsmittel wird an dem heizzupressenden Reifen gezielt ein ringkreisförmiger und kurzer Austrieb erzeugt, wobei der Austrieb zur Mitte des Ringkreises geneigt ist. Denn das Gummimaterial läuft in den verbleibenden Spalt in Richtung Entlüftungskanal unter den Ventiltellerrand und ist ringkreisförmig nach radial innen orientiert. Die in den Formenhohlraum hineinragende Formfläche des Ventils erzeugt in dem Reifen eine Ausnehmung, in welcher der ringkreisförmige Austrieb aufgenommen wird, so dass der Fahrzeugreifen nicht auf den Austrieben aufsteht, welches nachteilig für sein Fahrverhalten, insbesondere bei Eis und bei Schnee, wäre. Dadurch, dass die Austriebe beim Entformen des Reifens aus dem Entlüftungsmittel mit herausgezogen werden, wird das Entlüftungsmittel während des Entformungsprozesses selbständig gereinigt.

Vorteilhaft ist es, wenn das Ventil eine konvexe Wölbung aufweist, welche nach radial innen in den Formenhohlraum hinein weist. Hierdurch wird auf dem Fahrzeugreifen eine konkave Ausnehmung erzeugt, wodurch die Bildung von Spannungsrissen am Reifen, welche beispielsweise durch scharfe Kanten initiiert werden können, vermieden sind.

Zweckmäßig ist es, wenn der Ringspalt eine Breite kleiner als 0,15 mm aufweist. Die Untergrenze der Breite sollte größer als 15 - 20 µm bei 5 Ventilen pro Profilelement und einem Ventildurchmesser von 3 mm sein. Hierdurch ist gewährleistet, dass das Gas zuverlässig aus der Vulkanisierform abgeführt werden kann, andererseits ist die Spaltbreite aber derart klein, dass sich nur ein erwünschter kurzer Gummiaustrieb bilden kann.

Ein kurzer Gummiaustrieb ist insbesondere erhaltbar, wenn die Breite des Ringspaltes in Richtung des radial äußeren Endes des Entlüftungskanals verjüngend ausgebildet ist. Hierdurch wird ist Stoppwirkung für den Gummi erhöht, so dass nur ein kurzer Gummiaustrieb sich ausbilden kann.

Vorteilhaft ist es, wenn an dem Ventil und/oder an dem radial inneren Ende des Entlüftungskanals wenigstens ein Abstandshalter zur Erzeugung des Ringspaltes angeordnet ist. Der Abstandshalter stellt die geringste Spaltbreite zwischen dem Entlüftungskanal und dem Ventil sicher. Zudem ist der ringkreisförmige Austrieb durch diesen Abstandhalter in bestimmte Ringkreissektoren geteilt, wodurch die Ausformung des Reifens, insbesondere hinsichtlich der Austriebe, verbessert ist.

Der Ringspalt kann eine fixe oder eine variable Breite aufweisen.

In einer bestimmten Ausführungsform weist das Entlüftungsmittel einen Schaft auf, der in dem Entlüftungskanal angeordnet ist, wobei der Schaft auf seiner dem Formenhohlraum zugewandten Seite das tellerförmige Ventil aufweist, wobei das Ventil auf seiner dem Formenhohlraum abgewandten Seite als Kegelstumpf ausgebildet ist und wobei der Entlüftungskanal gegengleich zum Kegelstumpf des Ventils ausgebildet ist und wobei der Ringspalt zwischen diesen Kegelstumpfflächen ausgebildet. Hierdurch ist ein Entlüftungsmittel bereitgestellt, welches sehr ähnlich zu dem in der DE 195 43 276 A1 offenbarten Entlüftungsmittel aufgebaut ist, welches jedoch nicht gasdicht schließt, sondern an den Dichtflächen einen Spalt belässt.

Zweckmäßig ist es, wenn in dem Entlüftungskanal eine Hülse angeordnet ist, in der der Schaft angeordnet ist und welche die ringkreisförmige Kegelstumpffläche aufweist.

Vorteilhaft ist es, wenn an dem dem Formenhohlraum abgewandten Ende des Schaftes ein Anschlag angeordnet ist, mit dem der Schaft in dem Entlüftungskanal starr, aber zum Austausch lösbar, angeordnet ist.

Weitere Merkmale, Vorteile und Einzelheiten der Erfindung werden anhand der Zeichnungen, die schematische Ausführungsbeispiele darstellen, näher erläutert. Es zeigen die:
- Fig. 1: eine segmentierte Vulkanisierform mit Formsegmenten;
- Fig. 2: eine Ansicht eines längsgeschnittenen Entlüftungsmittels für die vorgenannte Vulkanisierform,
- Fig. 3: eine dreidimensionale, teilweise abgedeckte Darstellung des oberen Teils des Entlüftungsmittels der Fig. 2.

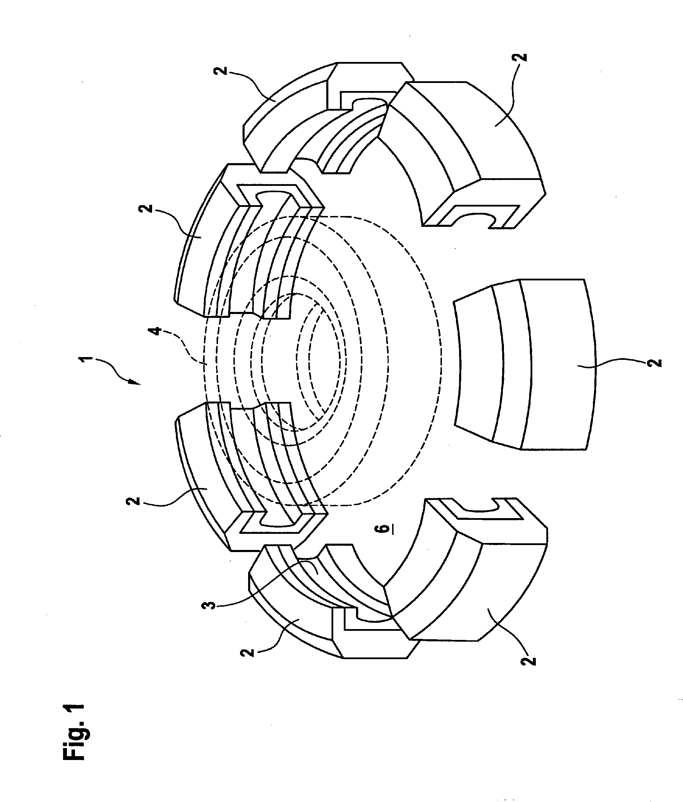

In der **Fig.1** ist eine vereinfachte schematische Darstellung einer segmentierten Vulkanisierform 1 für Fahrzeugreifen mit mehreren, zu einer umfangsmäßig geschlossenen Form zusammenfügbaren Formsegmenten 2 dargestellt. Die Formsegmente 2 sind radial verfahrbar und bilden radial innen einen Formenhohlraum 6. Die Formsegmente 2 weisen innenseitig Formflächen 3 auf. Die Formsegmente 2 weisen weiterhin Entlüftungsmittel 5 (nicht dargestellt) mit zylindrischen Entlüftungskanälen 7 (nicht dargestellt) auf, welche mit der Atmosphäre in Verbindung stehen und durch welche Gas aus dem Formenhohlraum 6 der Vulkanisierform 1 durch das Formsegment 2 hindurch nach außen ausleitbar ist.

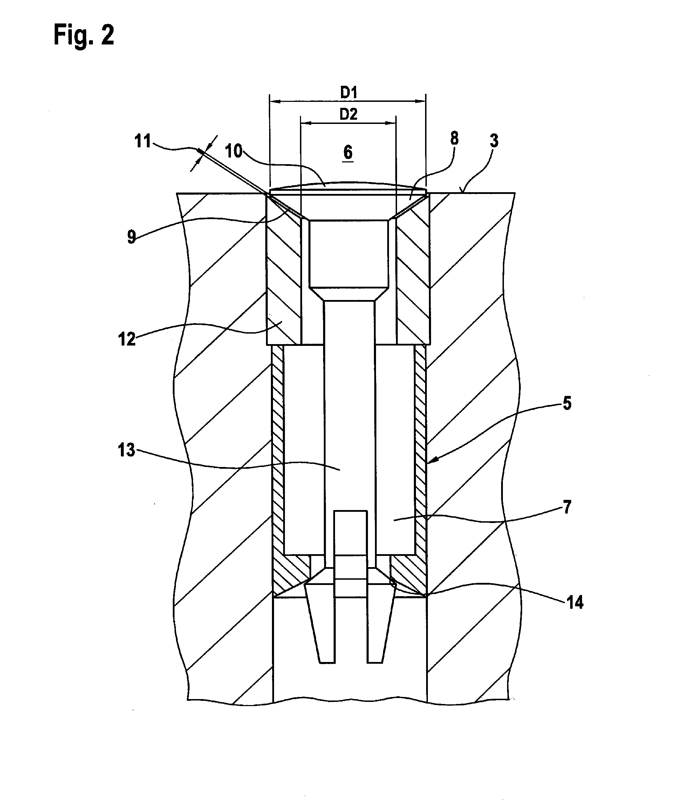

Die **Fig. 2** zeigt eine Ansicht eines längsgeschnittenen Entlüftungsmittels 5 für die vorgenannte Vulkanisierform 1. Das Entlüftungsmittel 5 weist ein tellerförmiges Ventil 8 auf, welches oberhalb des radial inneren, in den Formenhohlraum 6 mündenden Endes des Entlüftungskanals 7 angeordnet ist. Das Ventil 8 weist einen größeren Durchmesser d1 als der Durchmesser d2 des radial inneren Endes des Entlüftungskanals 7 auf. Das Ventil 8 ist derart in Bezug auf das radial innere Ende des Entlüftungskanals 7 angeordnet, dass Ringspalt 9 verbleibt, so dass das Entlüftungsmittel 5 nie gasdicht schließt. Das Ventil 8 weist eine konvexe, in den Formenhohlraum 6 hineinweisende Wölbung 10 auf und ragt über die Formfläche 3 hinaus in den Formenhohlraum 6 hinein.

Der Entlüftungskanal 7 weist eine Hülse 12 auf, in deren Inneren ein Schaft 13 angeordnet ist. Dieser Schaft 13 weist auf seinem dem Formenhohlraum 6 zugewandten Ende das tellerförmige Ventil 8 auf. Das Ventil 8 ist auf seiner dem Formenhohlraum 8 abgewandten Seite als Kegelstumpf ausgebildet, während der Entlüftungskanal 7, hier die Hülse 12, gegengleich zum Kegelstumpf des Ventils 8 ausgebildet ist. Zwischen diesen beiden gegengleichen Kegelstumpfflächen ist der Ringspalt 9 ausgebildet.

An seinem dem Formenhohlraum 6 abgewandten Ende des Schaftes 13 ist ein Anschlag 14 angeordnet, mit dem der Schaft 13 in dem Entlüftungskanal 7 bzw. der Hülse 12 fest, jedoch für einen Austausch des Schaftes 13 lösbar, angeordnet.

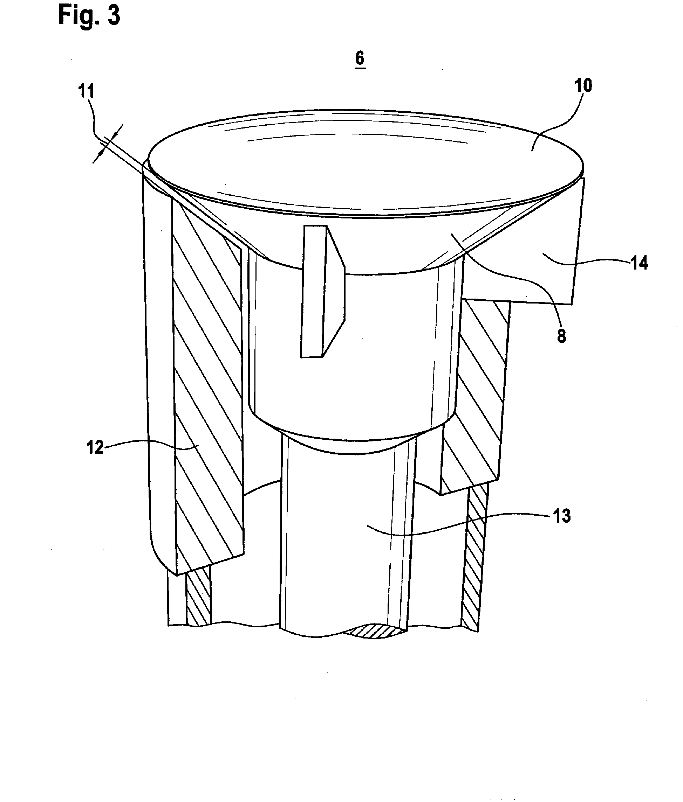

Die **Fig. 3** zeigt eine dreidimensionale, teilweise abgedeckte Darstellung des oberen Teils des Entlüftungsmittels der Fig. 2. Der Ringspalt 9 weist eine Breite 11 kleiner als 0,15 mm auf. Um den Ringspalt 9 stets offen zu erhalten, sind an dem radial inneren Ende der Hülse (oder, wenn keine Hülse angeordnet ist am Entlüftungskanal) wenigstens ein Abstandshalter 14 angeordnet.

### Bezugszeichenliste

### (Teil der Beschreibung)

- 1: Vulkanisierform
- 2: Formsegment
- 3: Formfläche
- 4: Reifen
- 5: Entlüftungsmittel
- 6: Formenhohlraum
- 7: Entlüftungskanal
- 8: Ventil
- 9: Ringspalt
- 10: Konvexe Wölbung
- 11: Breite des Ringspaltes
- 12: Hülse
- 13: Schaft
- 14: Ab standshalter

- D1: Durchmesser des Ventils
- D2: Durchmesser des Entlüftungskanals

## Patentansprüche

1. Vulkanisierform (1) für Fahrzeugreifen, welche aus Formsegmenten (2) mit innenseitigen Formflächen (3) besteht, wobei die Formsegmente (2) Entlüftungsmittel (5) mit zylindrischen Entlüftungskanälen (7) aufweisen, welche mit der Atmosphäre in Verbindung stehen und durch welche Luft aus dem Formenhohlraum (6) der Vulkanisierform (1) durch das Formsegment (2) hindurch nach außen ausleitbar ist, wobei ein tellerförmiges Ventil (8) oberhalb des radial inneren, in den Formenhohlraum (6) mündenden Endes des Entlüftungskanals (7) angeordnet ist, wobei das Ventil (8) einen größeren Durchmesser (D1) als das radial innere Ende des Entlüftungskanals (D2) aufweist und wobei das Ventil über die Formfläche (3) hinaus in den Formenhohlraum (6) hineinragt,
**dadurch gekennzeichnet, dass**
das Ventil (8) mit einem verbleibenden Ringspalt (9) in Bezug auf das radial innere Ende des Entlüftungskanals (7) angeordnet ist, so dass das Entlüftungsmittel (5) nie gasdicht schließt.

2. Vulkanisierform (1) nach Anspruch 1, **dadurch gekennzeichnet, dass** das Ventil (8) eine konvexe Wölbung (10) aufweist, welche nach radial innen in den Formenhohlraum (6) hinein weist.

3. Vulkanisierform (1) nach Anspruch 1 oder 2, **dadurch gekennzeichnet, dass** der Ringspalt (9) eine Breite (11) kleiner 0,15 mm aufweist.

4. Vulkanisierform (1) nach Anspruch 3, **dadurch gekennzeichnet, dass** die Breite (11) des Ringspaltes (9) in Richtung des radial äußeren Endes des Entlüftungskanals verjüngend ausgebildet ist oder dass die Breite (11) des Ringspaltes (9) in Richtung des radial äußeren Endes des Entlüftungskanals gleich ist.

5. Vulkanisierform (1) nach Anspruch 1 oder 2, **dadurch gekennzeichnet, dass** an dem Ventil (8) und/oder an dem radial inneren Ende des Entlüftungskanals (7) wenigstens ein Abstandshalter (14) zur Erzeugung des Ringspaltes (9) angeordnet ist.

6. Vulkanisierform (1) nach einem der vorangehenden Ansprüche, **dadurch gekennzeichnet, dass** der Ringspalt (9) fixe Breite (11) aufweist.

7. Vulkanisierform (1) nach einem oder mehreren der Ansprüche 1 - 4, **dadurch gekennzeichnet, dass** der Ringspalt (9) eine variable Breite (11) aufweist.

8. Vulkanisierform nach einem oder mehreren der vorangehenden Ansprüche, **dadurch gekennzeichnet, dass** das Entlüftungsmittel (5) einen Schaft (13) aufweist, der in dem Entlüftungskanal (7) angeordnet ist, dass der Schaft (13) auf seiner dem Formenhohlraum (6) zugewandten Seite das tellerförmige Ventil (8) aufweist und das auf der dem Formenhohlraum (6) abgewandten Seite als Kegelstumpf ausgebildet ist, dass der Entlüftungskanal (7) gegengleich zum Kegelstumpf des Ventils (8) ausgebildet ist und dass der Ringspalt (9) zwischen diesen Kegelstumpfflächen ausgebildet.

9. Vulkanisierform nach Anspruch 8, **dadurch gekennzeichnet, dass** in dem Entlüftungskanal (7) eine Hülse (12) angeordnet ist, in der der Schaft (13) angeordnet ist und welche die ringkreisförmige Kegelstumpffläche aufweist.

10. Vulkanisierform nach Anspruch 8 oder 9, **dadurch gekennzeichnet, dass** am dem Formenhohlraum (6) abgewandten Ende des Schaftes (13) ein Abstandhalter (14) angeordnet ist, mit dem der Schaft (13) in dem Entlüftungskanal (7) lösbar angeordnet ist.

## Claims

1. Vulcanizing mould (1) for vehicle tyres, which consists of mould segments (2) with inner moulding surfaces (3), wherein the mould segments (2) have venting means (5) with cylindrical venting channels (7), which are in connection with the atmosphere and through which air from the mould cavity (6) of the vulcanizing mould (1) can be directed to the outside through the mould segment (2), wherein a plate-shaped valve (8) is arranged above the radially inner end of the venting channel (7) that opens out into the mould cavity (6), wherein the valve (8) has a greater diameter (D1) than the radially inner end of the venting channel (D2) and wherein the valve protrudes beyond the moulding surface (3) into the mould cavity (6), **characterized in that**
the valve (8) is arranged with a remaining annular gap (9) with respect to the radial inner end of the venting channel (7), so that the venting means (5) never closes in a gas-tight manner.

2. Vulcanizing mould (1) according to Claim 1, **characterized in that** the valve (8) has a convex curvature (10), which faces radially inwards into the mould cavity (6).

3. Vulcanizing mould (1) according to Claim 1 or 2, **characterized in that** the annular gap (9) has a width (11) of less than 0.15 mm.

4. Vulcanizing mould (1) according to Claim 3, **characterized in that** the width (11) of the annular gap (9) is formed as tapering in the direction of the radially outer end of the venting channel or **in that** the width (11) of the annular gap (9) is constant in the direction of the radially outer end of the venting channel.

5. Vulcanizing mould (1) according to Claim 1 or 2, **characterized in that** at least one spacer (14) for producing the annular gap (9) is arranged at the valve (8) and/or at the radially inner end of the venting channel (7).

6. Vulcanizing mould (1) according to one of the preceding claims, **characterized in that** the annular gap (9) has a fixed width (11).

7. Vulcanizing mould (1) according to one or more of Claims 1 - 4, **characterized in that** the annular gap (9) has a variable width (11).

8. Vulcanizing mould according to one or more of the preceding claims, **characterized in that** the venting means (5) has a shaft (13), which is arranged in the venting channel (7), **in that** the shaft (13) has the plate-shaped valve (8) on its side that is facing the mould cavity (6) and the valve (8) is formed on the side that is facing away from the mould cavity (6) as a frustum of a cone, **in that** the venting channel (7) is formed as a mirror image of the frustum of a cone of the valve (8) and **in that** the annular gap (9) is formed between these frustoconical surfaces.

9. Vulcanizing mould according to Claim 8, **characterized in that** a sleeve (12), in which the shaft (13) is arranged and which has the annular frustoconical surface, is arranged in the venting channel (7).

10. Vulcanizing mould according to Claim 8 or 9, **characterized in that** a spacer (14), with which the shaft (13) is detachably arranged in the venting channel (7), is arranged at the end of the shaft (13) that is facing away from the mould cavity (6).

## Revendications

1. Moule de vulcanisation (1) pour pneus de véhicules, qui se compose de segments de moule (2) avec des surfaces de moule intérieures (3), les segments de moule (2) présentant des moyens de désaérage (5) avec des canaux de désaérage cylindriques (7) qui sont en liaison avec l'atmosphère et à travers lesquels de l'air peut être guidé vers l'extérieur hors de la cavité du moule (6) du moule de vulcanisation (1) à travers le segment de moule (2), une soupape en forme de plateau (8) étant disposée au-dessus de l'extrémité radialement interne du canal de désaérage (7) débouchant dans la cavité du moule (6), la soupape (8) présentant un plus grand diamètre (D1) que l'extrémité radialement interne du canal de désaérage (D2) et la soupape pénétrant au-delà de la surface du moule (3) dans la cavité du moule (6),
**caractérisé en ce que**
la soupape (8) est disposée avec une fente annulaire (9) restante par rapport à l'extrémité radialement interne du canal de désaérage (7) de telle sorte que le moyen de désaérage (5) ne ferme jamais de manière étanche aux gaz.

2. Moule de vulcanisation (1) selon la revendication 1, **caractérisé en ce que** la soupape (8) présente une courbure convexe (10) qui est tournée radialement vers l'intérieur dans la cavité du moule (6).

3. Moule de vulcanisation (1) selon la revendication 1 ou 2, **caractérisé en ce que** la fente annulaire (9) présente une largeur (11) inférieure à 0,15 mm.

4. Moule de vulcanisation (1) selon la revendication 3, **caractérisé en ce que** la largeur (11) de la fente annulaire (9) est réalisée de manière à se rétrécir dans la direction de l'extrémité radialement extérieure du canal de désaérage ou **en ce que** la largeur (11) de la fente annulaire (9) dans la direction de l'extrémité radialement extérieure du canal de désaérage est identique.

5. Moule de vulcanisation (1) selon la revendication 1 ou 2, **caractérisé en ce qu'**au moins un élément d'espacement (14) pour générer la fente annulaire (9) est disposé au niveau de la soupape (8) et/ou au niveau de l'extrémité radialement interne du canal de désaérage (7).

6. Moule de vulcanisation (1) selon l'une quelconque des revendications précédentes, **caractérisé en ce que** la fente annulaire (9) présente une largeur fixe (11).

7. Moule de vulcanisation (1) selon l'une ou plusieurs des revendications 1 à 4, **caractérisé en ce que** la fente annulaire (9) présente une largeur variable (11).

8. Moule de vulcanisation selon l'une ou plusieurs des revendications précédentes, **caractérisé en ce que** le moyen de désaérage (5) présente un arbre (13) qui est disposé dans le canal de désaérage (7), **en ce que** l'arbre (13) présente, sur son côté tourné vers la cavité du moule (6), la soupape (8) en forme de plateau et la soupape (8) est réalisée sous forme de tronc de cône sur le côté tourné à l'opposé de la cavité du moule (6), **en ce que** le canal de désaérage (7) est réalisé de manière diamétralement opposée au tronc de cône de la soupape (8) et **en ce que** la fente annulaire (9) est réalisée entre ces surfaces de tronc de cône.

9. Moule de vulcanisation selon la revendication 8, **caractérisé en ce que** dans le canal de désaérage (7) est disposée une douille (12) dans laquelle est disposé l'arbre (13) et qui présente la surface de tronc de cône de forme circulaire annulaire.

10. Moule de vulcanisation selon la revendication 8 ou 9, **caractérisé en ce qu'**à l'extrémité de l'arbre (13) opposée à la cavité du moule (6) est disposé un élément d'espacement (14) avec lequel l'arbre (13) est disposé de manière amovible dans le canal de désaérage (7).
